# EUROPEAN PATENT SPECIFICATION

(11) **EP 4 497 574 B1**
(45) Date of publication and mention of the grant of the patent: **07.10.2026**
(21) Application number: 24191258.3
(22) Date of filing: 26.07.2024
(51) Int. Cl.: B22F 5/10, B29C 64/336, B33Y 10/00, B33Y 70/10, B33Y 80/00, B22F 3/11, B29C 70/00, B22F 7/00, B22F 7/06, B22F 10/28

(54) **3-D LATTICE REINFORCED COMPOSITE WITH STRAIN LIMITER**
3D-GITTERVERSTÄRKTER VERBUNDSTOFF MIT DEHNUNGSBEGRENZER
COMPOSITE RENFORCÉ PAR UN TREILLIS EN 3D AVEC LIMITEUR DE CONTRAINTE

(30) Priority: 28.07.2023 US 202363529547 P
(43) Date of publication of application: 29.01.2025
(73) Proprietor: RTX Corporation, Farmington, CT 06032 (US)
(72) Inventor: WARREN, Eli, East Hartford, 06118 (US)
(74) Representative: Dehns

(56) References cited:
- IT-A1- 202100 008 423
- US-A1- 2016 027 425
- US-A1- 2021 213 656

## Description

### BACKGROUND

The present disclosure relates generally to composite structures and, more particularly, to three-dimensional (3-D) lattice reinforced composite structures.

Aircraft structures, such as engine and fuselage structures, face multiple challenges such as retaining sufficient stiffness to function effectively as structural components while addressing the three dimensional stresses that result from the aircraft maneuvering while in flight. Additionally, it is desirable for such structures to be light weight for fuel efficiency and payload capability.

In some applications, such structures can made from metallic or polymeric foam cores sandwiched between thin sheets of facing materials to form load bearing structures that may include aerodynamic surfaces. In some applications, the foam cores can be replaced by certain repeating 3-D lattice structures, which can be made from metallic or polymeric materials. Given the continued focus on identifying more effective materials for aerospace and other high performance applications, it is desirable to identify further materials that can demonstrate the desired combination of light weight, high stiffness, strength, and toughness.

US 2021/213656 A1 discloses a prior art three-dimensional composite structure as set forth in the preamble of claim 1.

### SUMMARY

One aspect of the invention includes a three-dimensional (3-D) composite structure having a 3-D lattice structure that includes a plurality of struts, a matrix phase surrounding the 3-D lattice structure, and a strain limiting structure positioned at or near a center of the 3-D lattice structure.

Another aspect of the invention includes a method of making a three-dimensional (3-D) composite structure, including the steps of forming, using additive manufacturing techniques, a 3-D lattice structure having a plurality of struts, forming, using additive manufacturing techniques, a matrix phase surrounding the 3-D lattice structure, and forming, using additive manufacturing techniques, a strain limiting structure positioned at or near a center of the 3-D lattice structure.

Features of embodiments are set forth in the dependent claims.

### BRIEF DESCRIPTION OF THE DRAWINGS

Fig. 1A is an isometric view of a stellated octahedron reinforcing lattice cell.
Fig. 1B is an isometric view of the stellated octahedron reinforcing lattice cell of Fig. 1A with a matrix phase.
Fig. 2A is an isometric view of another stellated octahedron reinforcing lattice cell.
Fig. 2B is an isometric view of another stellated octahedron reinforcing lattice cell of Fig. 2A with a matrix phase.
Fig. 3A is an isometric view of the stellated octahedron reinforcing lattice cell of Fig. 2A having a stain limiting structure.
Fig. 3B is an isometric view of the stellated octahedron reinforcing lattice cell of Fig. 3A with a matrix phase.
Fig. 4A is an isometric view of a pair of stellated octahedron reinforcing lattice cells having stain limiting structures.
Fig. 4B is an isometric view of a pair of stellated octahedron reinforcing lattice cells of Fig. 4A with a matrix phase.
Fig. 5A is an isometric view of another pair of stellated octahedron reinforcing lattice cells having stain limiting structures.
Fig. 5B is an isometric view of another pair of stellated octahedron reinforcing lattice cells of Fig. 5A with a matrix phase.
Fig. 6 is a isometric view of an exemplary a plurality of reinforcing lattice cells formed into a structure having face sheet.

### DETAILED DESCRIPTION

Certain aerospace and other high performance applications require structures that can demonstrate a combination of light weight, high stiffness, strength, and toughness. In some applications, such structures can made from metallic or polymeric foam cores sandwiched between thin sheets of facing materials to form load bearing structures that may include aerodynamic surfaces. In other applications, the foam cores can be replaced by certain repeating three-dimensional (3-D) lattices structures, can be made from metallic or polymeric materials.

Another option for such structures is to use a core of repeating 3-D lattice structures filled with a polymeric material, polymeric foam or metallic foam by themselves or surrounded by thin sheets of facing material to form reinforced sandwich materials. Such materials be used as load bearing structures and, if desired, may include aerodynamic surfaces. Surrounding or filling the repeating 3-D lattice structures, which can be made from metallic or polymeric materials, with a lower modulus, higher toughness, polymeric material, polymer foam, or metallic foam creates a composite material with the polymeric material or foam as a matrix phase and the 3-D lattice structures as a reinforcing phase. Such a composite can be designed to have high strength and stiffness and to have a very high global Poisson's ratio ≥ 1. When loaded in compression, contraction of the lattice elements around the tough matrix phase dissipates compressive forces and results in deformation with small strains. Such a composite will have high stiffness, high strength, and enhanced toughness.

The performance of composite materials made from a repeating 3-D lattice structure having a polymeric material, polymeric foam, or metallic foam matrix phase can be enhanced by embedding a strain limiting structure into the matrix phase at or near the center of each 3-D lattice structure. The strain limiting structure, which can have a higher strength than the matrix phase, limits deformation of struts that make up the 3-D lattice structure, resulting in an overall higher ultimate strength for the composite material.

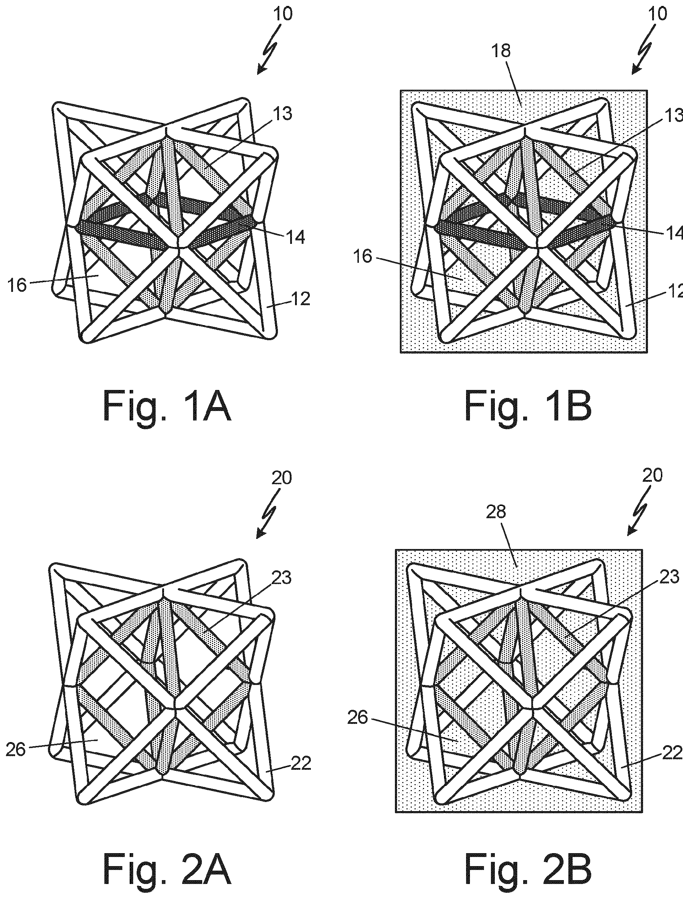

Figs. 1A and 1B show 3-D lattice structures that can be the basis for the repeating 3-D lattice structure used as the reinforcing phase in the composite materials of this disclosure. The repeating 3-D lattice structure can be formed from any polymeric or metallic material deemed appropriate for a particular application. For example, the repeating 3-D lattice structure can be made from steel, aluminum, titanium and alloys, including but not limited to Inco 625. Fig. 1A shows a 3-D lattice structure 10, in this case a stellated octahedron, formed with a plurality of struts **12,** including two sets of stiffening struts **13, 14.** As discussed above, the struts **12, 13, 14** can be made from suitable metallic or polymeric materials and can be formed with additive manufacturing (AM) techniques known in the art. For example, the AM techniques can include powder bed fusion processes (e.g., laser powder bed fusion, electron beam powder bed fusion, etc.), direct ink writing, fused deposition modeling, material jetting, stereolithography, and other processes. Depending on the materials selected for the components of the 3-D lattice structure **10,** it may be desirable to use an AM technique that can deposit multiple materials in a single build campaign.

While the struts **12, 13, 14** are shown with constant diameter circular cross-sections, the cross-sections could also have any other suitable geometric shape (e.g., triangular, rectangular, pentangular, etc.) and may have varying cross-sectional dimensions. In some applications, the combination of materials used to make the struts **12, 13, 14** and the shape and cross-sectional dimensions of the struts **12, 13, 14** can be selected to result in components having mechanical properties, including but not limited to modulus and toughness, deemed appropriate for a particular application. The spaces the struts **12, 13, 14** include open spaces **16** that can be filled with a suitable matrix phase **18** (see Fig. 1B), such as a polymeric material, a polymeric foam, or a metallic foam, to form a composite material. The polymeric material, a polymeric foam, or a metallic foam can be any such material useful as a matrix phase **18** for a particular application. As discussed above, in some examples the polymeric material, a polymeric foam, or a metallic foam matrix phase **18** may have a lower modulus and higher toughness than the material used to make the struts **12, 13, 14.** While the 3-D lattice structure **10** is shown as a stellated octahedron other 3-D geometric shapes formed with a lattice structure can be used as the reinforcing phase in the composite materials of this disclosure.

Figs. 2A and 2B show a 3-D lattice structure **20** similar to that depicted in Fig. 1A with the reinforcing struts **14** removed. The resulting 3-D lattice structure **20** includes a plurality of struts **22** with a single set of stiffening struts **23.** Removing the reinforcing struts **24** from the 3-D lattice structure **10** of Fig. 1A to form 3-D lattice structure **20** is an example of how the 3-D lattice structures of this disclosure can be "tuned" to absorb more energy. Similar to the 3-D lattice structure **10** of Fig. 1A, the 3-D lattice structure **20** of Fig. 2A include open spaces **26** that can be filled with a suitable matrix phase **28** (see Fig. 2B), such as a polymeric material, a polymeric foam, or a metallic foam, to form a composite material. The struts **22, 23** and the matrix **28** of Figs. 2A and 2B can be made from the same materials and have the same properties as discussed above with regard to the comparable elements of Figs. 1A and 1B and 2A/2B. While the 3-D lattice structure **20** is shown as a stellated octahedron other 3-D geometric shapes formed with a lattice structure can be used as the reinforcing phase in the composite materials of this disclosure.

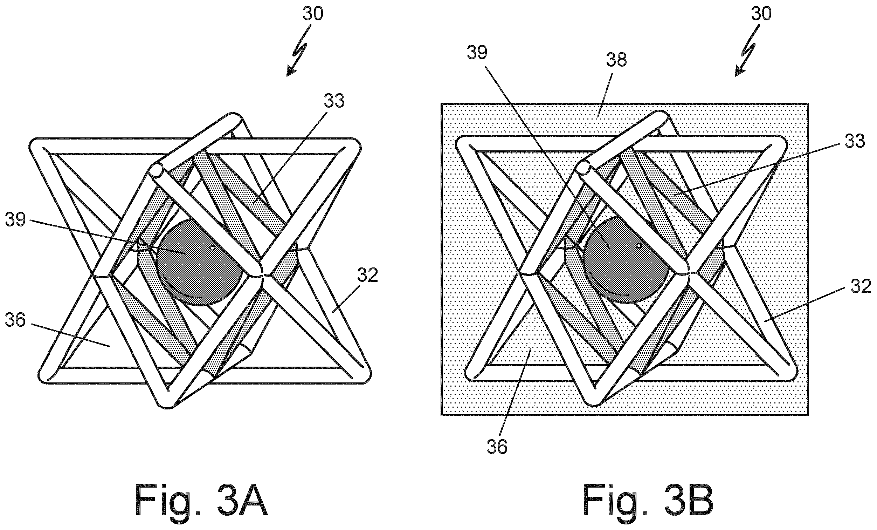

Figs. 3A and 3B show a 3-D lattice structure **30** similar to that depicted in Fig. 2A that includes a strain limiting structure **39** positioned an open space **36** at or near the center of the 3-D lattice structure **30** such that strain limiting structure **39** will be embedded in the matrix phase **38** (see Fig. 3B) when the 3-D lattice structure **30** in filled with the matrix phase **38.** The struts **32, 33** and the matrix **38** of Figs. 3A and 3B can be made from the same materials and have the same properties as discussed above with regard to the comparable elements of Figs. 1A/1B and 2A/2B. The strain limiting structure **39** of Figs. 3A and 3B can have a higher strength (and in some examples, higher hardness) than the matrix **38** of Fig. 3B to limit further the deformation of the struts **32, 33** of the 3-D lattice structure **30.** In some examples, the strain limiting structure **39** of the 3-D lattice structure **30** can be hollow or formed as a composite material, provided that the strain limiting structure **39** continues to have a higher strength (and in some examples, higher hardness) than the matrix **38** of Fig. 3B. As a result, a compressive or tensile load applied to the 3-D lattice structure **30** of Fig. 3B, will initially (and mostly) be absorbed/distributed by the Poisson effect created by deformation of the matrix phase **38.** After some deformation of the lattice structure **30,** the struts **32, 33** would contact the strain limiting structure **39** in the center of each 3-D lattice structure **30.** The strain limiting structure **39** would provide much more resistance to deformation than the surrounding matrix phase **38.** This construction will give the 3-D lattice structure **30** a much higher ultimate strength because the struts **32, 33** would be mostly intact and subjected to supported bending rather than buckling. In addition to including the strain limiting structure **39** in the center of each 3-D lattice structure **30,** the struts **32, 33** can be designed to optimize the eventual interaction with it, i.e., the struts that would be subjected to compression could have an idealized shape for resistance to buckling while being bent around the solid object geometry.

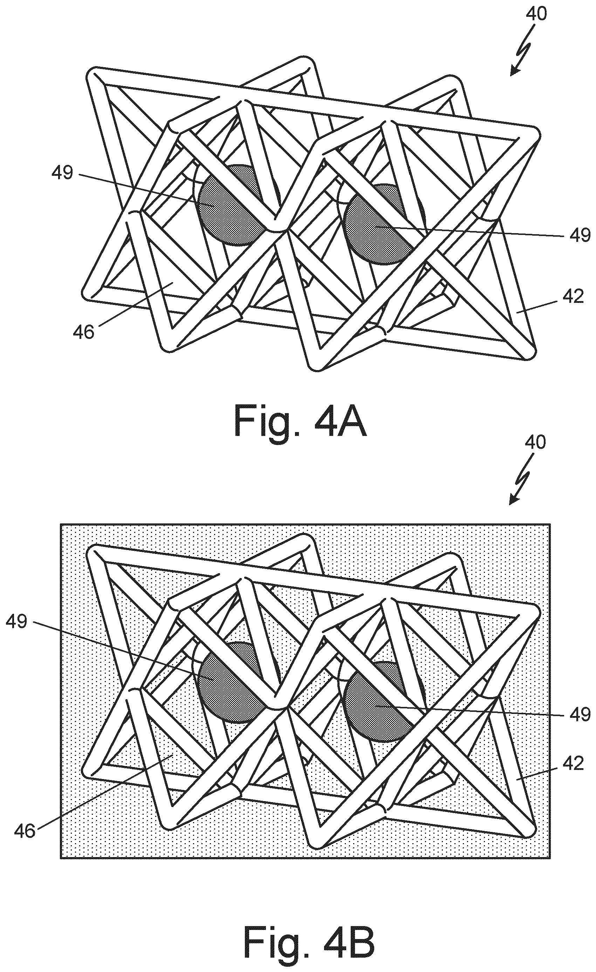

Figs. 4A and 4B show a 3-D lattice structure **40** similar to that depicted in Figs. 3A and 3B that include two lattice structures. It should understood that a 3-D lattice structure like that shown in Figs. 4A and 4B can include any number of lattice structures as desirable for a particular application. Similar to the structures of Figs. 3A and 3B, the 3-D lattice structure **40** includes a strain limiting structure **49** positioned an open space **46** at or near the center of the 3-D lattice structure **40** such that strain limiting structure **49** will be embedded in the matrix phase **48** (see Fig. 4B) when the 3-D lattice structure **40** in filled with the matrix phase **48.**

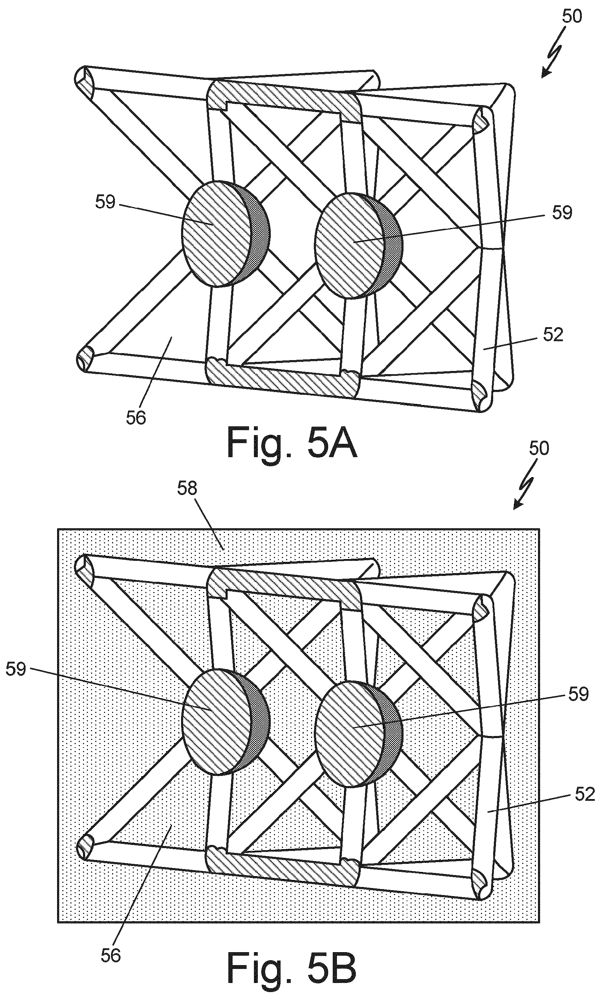

Figs. 5A and 5B show a 3-D lattice structure **50** similar to that depicted in Figs. 4A and 4B that include two lattice structures. As with the structures of Figs. 4A and 4B, it should understood that a 3-D lattice structure like that shown in Figs. 5A and 5B can include any number of lattice structures as desirable for a particular application. Similar to the structures of Figs. 4A and 34, the 3-D lattice structure **50** includes a strain limiting structure **59** positioned an open space **56** at or near the center of the 3-D lattice structure **50** such that the strain limiting structure **59** will be embedded in the matrix phase **58** (see Fig. 5B) when the 3-D lattice structure **50** in filled with the matrix phase **58.** The primary difference between the structures of Figs. 5A and 5B and Figs. 4A and 4B is the shape of the strain limiting structure **59** compared to the strain limiting structure **49.** These differences illustrate that the shape of any of the strain limiting structures **39, 49, 59** described in this disclosure can be any shape suitable for a particular application and are not limited to the spheres depicted in Figs. 3A/3B and 4A/4B and the hemisphere depicted in Figs. 5A and 5B.

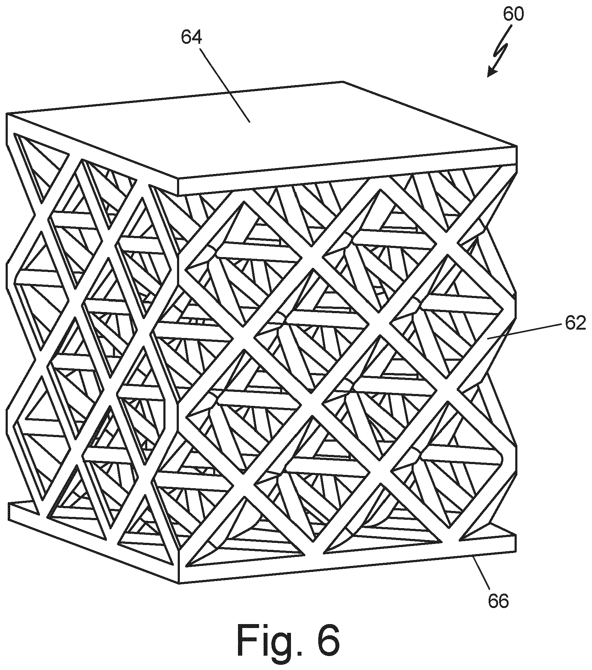

Fig. 6 is a isometric view of an exemplary reinforced structure **60** having a plurality of 3-D lattice structures **62** formed into a sandwich structure having a first face sheet **64** and a second face sheet **66.** In this view, the 3-D lattice structures **62** are shown as generic 3-D lattice structures to illustrate the variety of 3-D lattice structures that can be used to form such a structure. For example, the 3-D lattice structures **62** can be any of the 3-D lattice structures depicted in Figs. 1A-5A. The reinforced structure **60** can also include a matrix phase (not shown) as described with regard to Figs. 1B-5B. When reinforced structure **60** is made with structures similar to those depicted in Figs. 3B-5B, the full benefits described in this disclosure can be obtained.

For all of the examples discussed with regard to Figs. 1A/1B, 2A/2B, 3A/3B, 4A/4B, 5A/5B, and 6, the desired strut **32, 42, 52** shapes can be made with suitable additive manufacturing (AM) techniques (i.e., 3-D printing). The strain limiting structures **39, 49, 59** can also be made with AM techniques and can designed to control the ultimate failure strength and mode of the 3-D lattice structures. As shown in figs. 3A/3B, 4A/4B, and 5A/5B, the struts **32, 42, 52** can be formed as rods and the strain limiting structures **39, 49, 59** of can be formed as a sphere or hemisphere. In some examples, though, the struts **32, 42, 52** can be formed without a uniform cross section along their respective lengths and can be axis asymmetric. Likewise, the strain limiting structures **39, 49, 59** can be any shape, including non-symmetric shapes, having any desired orientation. In addition, the strain limiting structures **39, 49, 59** can, in some examples, be a composites themselves to permit enhanced energy absorption. In another example, the matrix phase **38, 48, 58** and/or strain limiting structures **39, 49, 59** can be made of fire retardant materials so the 3-D lattice structures **30, 40, 50** can be used in fire resistant assemblies. Suitable fire retardant materials can include those deemed appropriate for a specific application, including but not limited to Tetrabromobisphenol A (TBBPA); Hexabromocyclododecane (HBCD); Ethane; 1,2-dibromo; Antimony oxide (Sb₂O₃); Triphenyl phosphate (TPP); Tricresyl phosphate (TCP). In still another example, the strain limiting structures **39, 49, 59** can be made in whole or in part from an electrorheological fluids to permit the properties of the strain limiting structures **39, 49, 59** to be altered by application of an electric current.

The 3-D lattice structures of this disclosure are constructed to have a desirable combination of energy-absorption, toughness, ultimate strength, and stiffness. Using a multi-material AM machine (e.g., a multi-material 3D printer), the material used to form each component of the 3-D lattice structures can be selected to provide a selected level of performance. This can enable many custom uses or designs with very little added cost. The material use to form each component of the 3-D lattice structures can be printed and filled quickly, thus speeding up validation of any mechanical property analysis. The size, shape, and material of construction for each of the components (struts, matrix phase, and strain limiting structures) can be selected to meet requirements of particular applications. As discussed above, the strut cross-section can be non-circular and/or variable to achieve desired performance characteristics. Similarly, the strain limiting structures can be any shape and/or formed from a composite material. For example, the strain limiting structures can be gas filled to provide compressible cushion effect. The 3-D lattice structures can be formed from any suitable polyhedron shape. Combining metallic struts with a matrix phase made from a ductile metal with low melting point can allow for a metallic 3-D lattice structure useful for higher temperature applications.

### Discussion of Possible Embodiments

The following are non-exclusive descriptions of possible embodiments of the present invention.

A three-dimensional (3-D) composite structure, comprising a 3-D lattice structure that comprises a plurality of struts; a matrix phase surrounding the 3-D lattice structure; and a strain limiting structure positioned at or near a center of the 3-D lattice structure.

The 3-D composite structure of the preceding paragraph can optionally include, additionally and/or alternatively, any one or more of the following features, configurations and/or additional elements:
A further embodiment of the foregoing 3-D composite structure, wherein the 3-D lattice structure has a polyhedral shape.

A further embodiment of the foregoing 3-D composite structure, wherein the polyhedral shape is a stellated octahedron.

A further embodiment of any of the foregoing 3-D composite structures, wherein the plurality of struts comprise a polymeric material or a metallic material.

A further embodiment of any of the foregoing 3-D composite structures, wherein the matrix phase comprises a polymeric material, a polymeric foam, or a metallic foam.

A further embodiment of any of the foregoing 3-D composite structures, wherein the matrix phase comprises a material having a lower modulus and higher toughness than a material used to form the plurality of struts.

A further embodiment of any of the foregoing 3-D composite structures, wherein the strain limiting structure comprises a material having a higher strength that a material used to form the matrix phase.

A further embodiment of any of the foregoing 3-D composite structures, wherein the strain limiting structure comprises a hollow structure or a composite material.

A further embodiment of any of the foregoing 3-D composite structures, wherein the plurality of struts and the matrix phase are formed from fire-retardant materials.

A further embodiment of any of the foregoing 3-D composite structures, wherein the strain limiting structure comprises an electrorheological material.

A method of making a three-dimensional (3-D) composite structure, comprising the steps of: forming, using additive manufacturing techniques, a 3-D lattice structure that comprises a plurality of struts; forming, using additive manufacturing techniques, a matrix phase surrounding the 3-D lattice structure; and forming, using additive manufacturing techniques, a strain limiting structure positioned at or near a center of the 3-D lattice structure.

The 3-method of the preceding paragraph can optionally include, additionally and/or alternatively, any one or more of the following features, configurations and/or additional elements:
A further embodiment of the foregoing method, wherein the 3-D lattice structure has a polyhedral shape.

A further embodiment of the foregoing method, wherein the polyhedral shape is a stellated octahedron.

A further embodiment of any of the foregoing methods, wherein the plurality of struts comprise a polymeric material or a metallic material.

A further embodiment of any of the foregoing methods, wherein the matrix phase comprises a polymeric material, a polymeric foam, or a metallic foam.

A further embodiment of any of the foregoing methods, wherein the matrix phase comprises a material having a lower modulus and higher toughness than a material used to form the plurality of struts.

A further embodiment of any of the foregoing methods, wherein the strain limiting structure comprises a material having a higher strength that a material used to form the matrix phase.

A further embodiment of any of the foregoing methods, wherein the strain limiting structure comprises a hollow structure or a composite material.

A further embodiment of any of the foregoing methods, wherein the plurality of struts and the matrix phase are formed from fire-retardant materials.

A further embodiment of any of the foregoing methods, wherein the strain limiting structure comprises an electrorheological material.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A three-dimensional (3-D) composite structure (60), comprising:
a 3-D lattice structure (10; 20; 30; 40; 50; 62) that comprises a plurality of struts (12, 13, 14; 22, 23; 32, 33; 42; 52); and
a matrix phase (18; 28; 38; 48; 58) surrounding the 3-D lattice structure (10...62), wherein the matrix phase (18... 58) comprises a material having a lower modulus and higher toughness than a material used to form the plurality of struts (12... 52),
**characterised in that** the 3-D composite structure comprises:
a strain limiting structure (39; 49; 59) positioned at or near a center of the 3-D lattice structure (10...62), wherein the strain limiting structure (39; 49; 59) comprises a material having a higher strength than the material used to form the matrix phase (18... 58).

2. The 3-D composite structure of claim 1, wherein the 3-D lattice structure (10... 62) has a polyhedral shape.

3. The 3-D composite structure of claim 2, wherein the polyhedral shape is a stellated octahedron.

4. The 3-D composite structure of any of the preceding claims, wherein the plurality of struts (12... 52) comprise a polymeric material or a metallic material.

5. The 3-D composite structure of any of the preceding claims, wherein the matrix phase (18... 58) comprises a polymeric material, a polymeric foam, or a metallic foam.

6. The 3-D composite structure of any of the preceding claims, wherein the strain limiting structure (39; 49; 59) comprises a hollow structure, a composite material, or an electrorheological material.

7. The 3-D composite structure of any of the preceding claims, wherein the plurality of struts (12... 52) and the matrix phase (18; 59) are formed from fire-retardant materials.

8. A method of making a three-dimensional (3-D) composite structure (60), comprising the steps of:
forming, using additive manufacturing techniques, a 3-D lattice structure (10... 62) that comprises a plurality of struts (12... 52);
forming, using additive manufacturing techniques, a matrix phase (18...58) surrounding the 3-D lattice structure (10...62), wherein the matrix phase (18... 58) comprises a material having a lower modulus and higher toughness than a material used to form the plurality of struts (12... 52); and
forming, using additive manufacturing techniques, a strain limiting structure (39; 49; 59) positioned at or near a center of the 3-D lattice structure (10...62), wherein the strain limiting structure (39; 49; 59) comprises a material having a higher strength than the material used to form the matrix phase (18... 58).

9. The method of making 3-D composite structure of claim 8, wherein the 3-D lattice structure (10... 62) has a polyhedral shape.

10. The method of making 3-D composite structure of claim 9, wherein the polyhedral shape is a stellated octahedron.

11. The method of making 3-D composite structure of any of claims 8 to 10, wherein the plurality of struts (12...52) comprise a polymeric material or a metallic material.

12. The method of making 3-D composite structure of any of claims 8 to 11, wherein the matrix phase (18... 58) comprises a polymeric material, a polymeric foam, or a metallic foam.

13. The method of making 3-D composite structure of any of claims 8 to 12, wherein the strain limiting structure (39; 49; 59) comprises a hollow structure, a composite material, or an electrorheological material.

14. The method of making 3-D composite structure of any of claims 8 to 13, wherein the plurality of struts (12... 52) and the matrix phase (18...58) are formed from fire-retardant materials.

## Patentansprüche

1. Dreidimensionale (3D) Verbundstoffstruktur (60), umfassend:
eine 3D-Gitterstruktur (10; 20; 30; 40; 50; 62), die eine Vielzahl von Streben (12, 13, 14; 22, 23; 32, 33; 42; 52) umfasst; und
eine Matrixphase (18; 28; 38; 48; 58), welche die 3D-Gitterstruktur (10...62) umgibt, wobei die Matrixphase (18...58) ein Material umfasst, das einen niedrigeren Modul und eine höhere Zähigkeit aufweist als ein Material, das zum Ausbilden der Vielzahl von Streben (12...52) verwendet wird,
**dadurch gekennzeichnet, dass** die 3D-Verbundstoffstruktur Folgendes umfasst:
eine dehnungsbegrenzende Struktur (39; 49; 59), die an oder nahe einer Mitte der 3D-Gitterstruktur (10...62) positioniert ist, wobei die dehnungsbegrenzende Struktur (39; 49; 59) ein Material umfasst, das eine höhere Festigkeit aufweist als das Material, das zum Ausbilden der Matrixphase (18...58) verwendet wird.

2. 3D-Verbundstoffstruktur nach Anspruch 1, wobei die 3D-Gitterstruktur (10...62) eine polyedrische Form aufweist.

3. 3D-Verbundstoffstruktur nach Anspruch 2, wobei die polyedrische Form ein sternförmiges Oktaeder ist.

4. 3D-Verbundstoffstruktur nach einem der vorhergehenden Ansprüche, wobei die Vielzahl von Streben (12...52) ein Polymermaterial oder ein Metallmaterial umfasst.

5. 3D-Verbundstoffstruktur nach einem der vorhergehenden Ansprüche, wobei die Matrixphase (18...58) ein Polymermaterial, einen Polymerschaum oder einen Metallschaum umfasst.

6. 3D-Verbundstoffstruktur nach einem der vorhergehenden Ansprüche, wobei die dehnungsbegrenzende Struktur (39; 49; 59) eine Hohlstruktur, ein Verbundstoffmaterial oder ein elektrorheologisches Material umfasst.

7. 3D-Verbundstoffstruktur nach einem der vorhergehenden Ansprüche, wobei die Vielzahl von Streben (12...52) und die Matrixphase (18; 59) aus feuerhemmenden Materialien ausgebildet sind.

8. Verfahren zum Herstellen einer dreidimensionalen (3D) Verbundstoffstruktur (60), umfassend die folgenden Schritte:
Ausbilden einer 3D-Gitterstruktur (10...62), die eine Vielzahl von Streben (12...52) umfasst, unter Verwendung von additiven Fertigungstechniken;
Ausbilden einer Matrixphase (18...58), welche die 3D-Gitterstruktur (10...62) umgibt, unter Verwendung von additiven Herstellungstechniken, wobei die Matrixphase (18...58) ein Material umfasst, das einen niedrigeren Modul und eine höhere Zähigkeit aufweist als ein Material, das zum Ausbilden der Vielzahl von Streben (12...52) verwendet wird; und
Ausbilden einer dehnungsbegrenzenden Struktur (39; 49; 59), die an oder nahe einer Mitte der 3D-Gitterstruktur (10...62) positioniert ist, unter Verwendung von additiven Fertigungstechniken, wobei die dehnungsbegrenzende Struktur (39; 49; 59) ein Material umfasst, das eine höhere Festigkeit aufweist als das Material, das zum Ausbilden der Matrixphase (18...58) verwendet wird.

9. Verfahren zum Herstellen einer 3D-Verbundstoffstruktur nach Anspruch 8, wobei die 3D-Gitterstruktur (10...62) eine polyedrische Form aufweist.

10. Verfahren zum Herstellen einer 3D-Verbundstoffstruktur nach Anspruch 9, wobei die polyedrische Form ein sternförmiges Oktaeder ist.

11. Verfahren zum Herstellen einer 3D-Verbundstoffstruktur nach einem der Ansprüche 8 bis 10, wobei die Vielzahl von Streben (12...52) ein Polymermaterial oder ein Metallmaterial umfasst.

12. Verfahren zum Herstellen einer 3D-Verbundstoffstruktur nach einem der Ansprüche 8 bis 11, wobei die Matrixphase (18...58) ein Polymermaterial, einen Polymerschaum oder einen Metallschaum umfasst.

13. Verfahren zum Herstellen einer 3D-Verbundstoffstruktur nach einem der Ansprüche 8 bis 12, wobei die dehnungsbegrenzende Struktur (39; 49; 59) eine Hohlstruktur, ein Verbundstoffmaterial oder ein elektrorheologisches Material umfasst.

14. Verfahren zum Herstellen einer 3D-Verbundstoffstruktur nach einem der Ansprüche 8 bis 13, wobei die Vielzahl von Streben (12...52) und die Matrixphase (18...58) aus feuerhemmenden Materialien ausgebildet sind.

## Revendications

1. Structure composite tridimensionnelle (3D) (60), comprenant :
une structure en treillis 3D (10 ; 20 ; 30 ; 40 ; 50 ; 62) qui comprend une pluralité de barres (12, 13, 14 ; 22, 23 ; 32, 33 ; 42 ; 52) ; et
une phase matricielle (18 ; 28 ; 38 ; 48 ; 58) entourant la structure en treillis 3D (10...62), dans laquelle la phase matricielle (18...58) comprend un matériau ayant un module inférieur et une ténacité supérieure à ceux d'un matériau utilisé pour former la pluralité de barres (12...52),
**caractérisée en ce que** la structure composite 3D comprend :
une structure limitant la déformation (39 ; 49 ; 59) positionnée au centre ou près du centre de la structure en treillis 3D (10...62), dans laquelle la structure limitant la déformation (39 ; 49 ; 59) comprend un matériau ayant une résistance supérieure à celle du matériau utilisé pour former la phase matricielle (18...58).

2. Structure composite 3D selon la revendication 1, dans laquelle la structure en treillis 3D (10... 62) a une forme polyédrique.

3. Structure composite 3D selon la revendication 2, dans laquelle la forme polyédrique est un octaèdre étoilé.

4. Structure composite 3D selon l'une quelconque des revendications précédentes, dans laquelle la pluralité de barres (12...52) comprend un matériau polymère ou un matériau métallique.

5. Structure composite 3D selon l'une quelconque des revendications précédentes, dans laquelle la phase matricielle (18...58) comprend un matériau polymère, une mousse polymère ou une mousse métallique.

6. Structure composite 3D selon l'une quelconque des revendications précédentes, dans laquelle la structure limitant la déformation (39 ; 49 ; 59) comprend une structure creuse, un matériau composite ou un matériau électrorhéologique.

7. Structure composite 3D selon l'une quelconque des revendications précédentes, dans laquelle la pluralité de barres (12...52) et la phase matricielle (18 ; 59) sont formées de matériaux ignifuges.

8. Procédé de fabrication d'une structure composite tridimensionnelle (3D) (60), comprenant les étapes suivantes :
la formation, à l'aide de techniques de fabrication additive, d'une structure en treillis 3D (10... 62) qui comprend une pluralité de barres (12...52) ;
la formation, à l'aide de techniques de fabrication additive, d'une phase matricielle (18...58) entourant la structure en treillis 3D (10...62), dans laquelle la phase matricielle (18...58) comprend un matériau ayant un module inférieur et une ténacité supérieure à ceux d'un matériau utilisé pour former la pluralité de barres (12...52) ; et
la formation, à l'aide de techniques de fabrication additive, d'une structure limitant la déformation (39 ; 49 ; 59) positionnée au centre ou près du centre de la structure en treillis 3D (10...62), dans laquelle la structure limitant la déformation (39 ; 49 ; 59) comprend un matériau ayant une résistance supérieure à celle du matériau utilisé pour former la phase matricielle (18...58).

9. Procédé de fabrication d'une structure composite 3D selon la revendication 8, dans lequel la structure en treillis 3D (10...62) a une forme polyédrique.

10. Procédé de fabrication d'une structure composite 3D selon la revendication 9, dans lequel la forme polyédrique est un octaèdre étoilé.

11. Procédé de fabrication d'une structure composite 3D selon l'une quelconque des revendications 8 à 10, dans lequel la pluralité de barres (12...52) comprend un matériau polymère ou un matériau métallique.

12. Procédé de fabrication d'une structure composite 3D selon l'une quelconque des revendications 8 à 11, dans lequel la phase matricielle (18...58) comprend un matériau polymère, une mousse polymère ou une mousse métallique.

13. Procédé de fabrication d'une structure composite 3D selon l'une quelconque des revendications 8 à 12, dans lequel la structure limitant la déformation (39 ; 49 ; 59) comprend une structure creuse, un matériau composite ou un matériau électrorhéologique.

14. Procédé de fabrication d'une structure composite 3D selon l'une quelconque des revendications 8 à 13, dans lequel la pluralité de barres (12...52) et la phase matricielle (18...58) sont formées à partir de matériaux ignifuges.
